(19) **Europäisches Patentamt / European Patent Office / Office européen des brevets**

(11) **EP 2 410 350 A1**

(12) **DEMANDE DE BREVET EUROPEEN**

(43) Date de publication:
**25.01.2012 Bulletin 2012/04**

(51) Int Cl.:
**G01S 19/02** *(2010.01)*

(21) Numéro de dépôt: **11171964.7**

(22) Date de dépôt: **29.06.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **19.07.2010 FR 1003025**

(71) Demandeur: **Thales**
**92200 Neuilly Sur Seine (FR)**

(72) Inventeur: **Revol, Marc**
**26120 UPIC (FR)**

(74) Mandataire: **Brunelli, Gérald**
**Marks & Clerk France**
**Immeuble Visium**
**22, avenue Aristide Briand**
**94117 Arcueil Cedex (FR)**

(54) **Dispositif d'antenne à ouverture synthetique d'emission de signaux d'un système de navigation par satellites comprenant une porteuse et des moyens de determination de sa trajectoire**

(57) Dispositif d'antenne à ouverture synthétique d'émission de signaux d'un système comprenant une porteuse et des moyens de détermination de sa trajectoire, comprenant, pour chaque signal respectivement associé à une direction spatiale, des moyens de traitement adaptés pour générer un signal à phase stationnaire sur une fenêtre temporelle correspondant à la distance parcourue par le dispositif pendant la durée d'intégration cohérente, avant modulation dudit signal reçu, lesdits moyens de traitement comprenant des moyens de correction adaptés pour corriger la phase de porteuse dudit signal.

EP 2 410 350 A1

**Description**

L'invention porte sur un émetteur de signaux d'un système de navigation par satellites, destiné à améliorer la robustesse d'émission des signaux en direction de zones de réception dédiées.

L'invention s'applique à des dispositifs d'émission-réception coopératifs de type localisation ou télécommunication, impliquant un accrochage du récepteur sur la phase de porteuse du signal reçu.

Un exemple en est donné par les systèmes GNSS de radionavigation par satellites qui utilisent une constellation de satellites tournant autour de la terre sur des orbites très précisément déterminées. Ainsi, il est possible de connaître à tout instant la position d'un satellite quelconque. Les orbites des satellites sont choisies de façon à ce qu'à toute heure, 6 à 12 satellites soient visibles en tout point de la terre. Chaque satellite émet plusieurs signaux radioélectriques de type de modulation et de fréquences déterminés. Au sol ou sur un véhicule terrien, maritime ou aérien, un récepteur reçoit les signaux émis par des satellites visibles.

Un récepteur de localisation mesure la durée de propagation requise pour qu'une marque horaire transmise par un satellite lui parvienne. Les marques horaires sont codées sur des ondes porteuses par la technique de modulation de phase. Cette durée multipliée par la vitesse de la lumière dans le milieu traversé donne une mesure de distance appelée pseudo-distance. A partir des mesures des pseudo-distances le séparant de chaque satellite visible, et de la connaissance de la position des satellites, le récepteur déduit sa position précise en latitude, longitude, et en altitude dans un repère terrestre par une résolution numérique voisine de la triangulation. A partir des mesures de phase (Doppler) des porteuses, et de la connaissance précise de la vitesse apparente des satellites, le récepteur calcule précisément la vitesse. Il peut également en déduire la date et l'heure précise dans le repère temporel du système de navigation par satellites.

La réception des signaux satellites et la précision des mesures reste très sensible, malgré l'élargissement des codes d'étalement et l'accroissement des puissances d'émission, à la présence de sources de brouillages et d'interférences, ainsi qu'à l'existence de trajets réfléchis.

Une voie d'amélioration passe par l'utilisation d'antennes directives à l'émission permettant d'améliorer le gain d'émission et de privilégier la réception dans des zones de réception dédiées aux applications. Cependant, ces solutions imposent des tailles d'antennes contraignantes au niveau du satellite, et augmentent sensiblement la complexité matérielle pour les étages de radiofréquences RF de l'émetteur (autant de voies RF que d'éléments d'antenne) ainsi que la charge de calcul.

Un but de l'invention est de limiter la complexité de telles antennes à l'émission, en réduisant leur dimension et la complexité de leur traitement.

Selon un aspect de l'invention, il est proposé un dispositif d'antenne à ouverture synthétique d'émission de signaux d'un système de navigation par satellites comprenant une porteuse et des moyens de détermination de sa trajectoire, ledit dispositif comprenant, pour chaque signal respectivement associé à une direction spatiale, des moyens de traitement adaptés pour générer un signal à phase stationnaire sur une fenêtre temporelle correspondant à la distance parcourue par le dispositif pendant la durée d'intégration cohérente, avant modulation dudit signal, lesdits moyens de traitement comprenant des moyens de correction adaptés pour corriger la phase de porteuse dudit signal.

Un tel dispositif permet de limiter la complexité de l'antenne d'émission, en réduisant la charge du traitement. En outre, le traitement d'antenne synthétique permet l'obtention de gains de directivité importants dans n'importe quelle direction de visée, sans commune mesure avec ceux atteignables par des antennes réseaux du fait de l'encombrement et du nombre d'antennes élémentaires qui seraient alors nécessaires, permettant ainsi d'améliorer le gain d'émission dans la direction de la zone choisie, tout en occultant l'émission dans les autres directions, et en rendant impossible la localisation en dehors de la zone définie. Du fait de la simplicité du traitement d'antenne synthétique proposé, il est possible de réaliser l'émission simultanée pour différentes directions de visées associées à chaque satellite.

Dans un mode de réalisation, lesdits moyens de correction comprennent, pour corriger la phase de porteuse dudit signal :

- des premiers moyens de détermination d'un vecteur vitesse de déplacement du dispositif ;
- des moyens de projection orthogonale dudit vecteur vitesse de déplacement du dispositif dans la direction dudit signal ;
- un premier oscillateur à commande numérique recevant en entrée le ladite projection orthogonale ;
- un premier multiplicateur (9) pour compenser la phase du signal de porteuse généré par un deuxième oscillateur à commande numérique (8) de porteuse par le signal délivré par ledit premier oscillateur à commande numérique (5) ;
- un deuxième multiplicateur (11) pour multiplier le signal délivré par ledit premier multiplicateur (9) et les composantes de bases complexes du code d'étalement du signal généré par un générateur de code (7) ; et
- des moyens de transposition de fréquence (14) et d'amplification (15) pour transfert vers l'antenne d'émission du signal délivré par le deuxième multiplicateur (11) sur un intervalle de temps d'une durée T correspondant à une période du code d'étalement.

Un tel mode de réalisation permet de garder l'architecture classique d'un émetteur de système de navigation par satellites. La compensation de phase est réalisée à basse cadence avant corrélation par le code local.

Selon un autre aspect de l'invention, il est également proposé un procédé d'émission par antenne à ouverture synthétique de signaux d'un système de navigation par satellites comprenant une porteuse et des moyens de détermination de sa trajectoire, dans lequel, pour chaque signal respectivement associé à une direction spatiale, on effectue un traitement adapté pour générer un signal à phase stationnaire sur une fenêtre temporelle correspondant à la distance parcourue par le dispositif pendant la durée d'intégration cohérente, avant modulation dudit signal par ledit code, ledit traitement comprenant une correction de la phase de porteuse dudit signal.

Selon un mode de mise en oeuvre, ladite correction de la phase de porteuse dudit signal comprend, en phase d'acquisition ou en phase de poursuite :

- une détermination d'un vecteur vitesse de déplacement de ladite antenne ;
- une projection orthogonale dudit vecteur vitesse de déplacement dans la direction d'émission dudit signal ;
- une génération d'un signal de correction de la phase de la porteuse, synchronisé sur la période du code d'étalement, réalisée par un oscillateur numérique commandé en phase à partir de la vitesse de déplacement de l'antenne dans la direction d'émission du signal ;
- une mise à zéro dudit signal de correction à chaque début de période dudit code d'étalement ;
- une multiplication en composantes de bases complexes dudit signal de correction et du signal à émettre, synchronisée sur chaque intervalle de temps d'une durée T correspondant à une période du code d'étalement ; et
- une émission cohérente du signal résultant de ladite multiplication.

La correction de phase ainsi réalisée permet de compenser l'évolution de la phase du signal correspondant au mouvement du porteur dans la direction visée, la rendant alors équivalente à celle qui serait délivrée dans le cas d'un déplacement contenu dans un plan orthogonal à la direction visée, assurant ainsi la mise en cohérence des signaux qui sont transmis dans la direction visée.

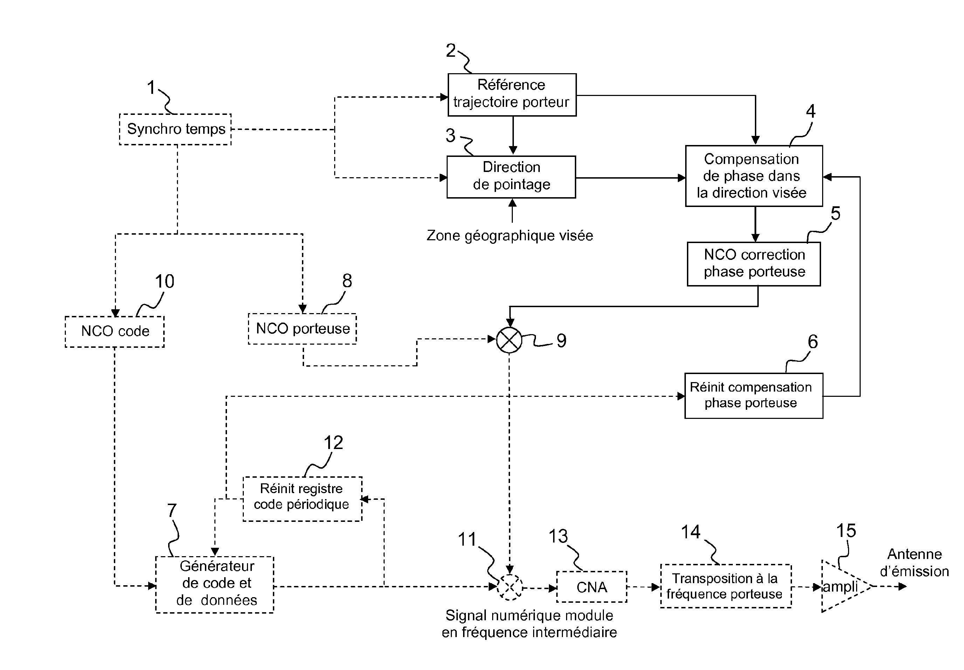

L'invention sera mieux comprise à l'étude d'un mode de réalisation décrit à titre d'exemple nullement limitatif et illustré par le dessin annexé illustrant schématiquement un mode de réalisation de l'invention en émission cohérente sur porteuse.

De manière générale, on parle "d'antenne synthétique" lorsqu'une ressource déficiente, comme un manque d'espace, ou une contrainte de fonctionnement, est remplacée par du temps. Ceci suppose une certaine stabilité spatiale de la scène : il peut s'agir d'une cohérence parfaite (SAR, SAS, Séismique ou Echographie), ou seulement d'une stationnarité spatiale au second ordre (synthèse d'ouverture en radioastronomie).

Les techniques d'antennes synthétiques sont connues en réception dans les domaines de la cartographie, du sondage ou de l'échographie.

En effet, l'antenne synthétique, est, à l'origine appliquée en réception à la cartographie radar ou SAR pour "Synthetic Aperture Radar" en langue anglo-saxonne, exploite le mouvement propre du véhicule portant l'antenne physique. Elle fabrique de manière artificielle ou simule une antenne de grande taille dont la géométrie correspond à l'espace couvert par l'antenne lors de son déplacement.

L'application au domaine de la navigation par satellites offre de nouveaux horizons du fait de la nécessité de répondre à la fois à des contraintes de limitation de la complexité des émetteurs de plus en plus intégrés, ainsi qu'au besoin d'assurer intégrité et continuité grandissante des mesures produites.

Dans le cas de la synthèse des signaux de système de navigation par satellites, le signal émis est maîtrisé en phase et en retard. Tout se passe comme si on disposait d'une antenne d'émission dont la géométrie correspondrait à l'ensemble des positions occupées par l'antenne d'émission. Il est ainsi possible de reconstituer le diagramme d'émission a posteriori par sommation des signaux disponibles aux différents instants d'émission, en tenant compte du mouvement de l'émetteur.

Considérons un émetteur mobile composé d'une antenne simple et la suite $\{(e(t_n))\}$, (n variant de 1 à N) des signaux disponibles sur l'antenne d'émission à des instants successifs $(t_n)$, auxquels l'antenne occupe des positions variables. Si on réalise la somme des signaux en question, cela est équivalent à fabriquer le signal qui serait effectivement émis sur une antenne composite de N capteurs sur laquelle les signaux $\{(e(t_n))\}$ seraient appliqués simultanément à tous les émetteurs élémentaires de l'antenne.

Il est alors possible d'appliquer des décalages de phase $\{\tau_n\}_{n=1,N}$ aux signaux précédents, ces déphasages pouvant être calculés de manière à compenser le déphase naturel du signal d'émission lié au déplacement (correspondant à évolution de la phase du signal en fonction du temps considérée aux différentes positions de l'antenne d'émission) et à orienter l'antenne virtuelle d'émission dans la direction visée (formation de voie). Cette possibilité d'orienter l'antenne d'émission en une direction quelconque constitue l'intérêt principal de l'antenne synthétique d'émission.

Il reste quand même une différence entre une antenne synthétique et un vrai réseau d'antennes : le bruit électronique pour chaque mesure est augmenté par rapport à ce qu'il serait si l'on disposait effectivement de l'antenne d'émission complète. En émission le gain d'antenne est dans un rapport en $\sqrt{N}$ au lieu de N.

Par ailleurs, pour mettre en oeuvre un tel traitement, il est nécessaire de connaître la trajectoire parcourue par l'antenne pendant la durée d'intégration cohérente, avec une précision meilleure que λ/8, λ étant la longueur d'onde de la porteuse ou de la sous-porteuse.

Le traitement peut être réalisé à partir d'une seule antenne élémentaire, ou d'une pluralité (antenne réseau) si elle est déjà disponible, et limite l'accroissement de complexité sur le matériel ou le traitement interne de l'émetteur. En outre, ce traitement fournit une solution robuste évitant toute forme de calibration ordinairement liée au traitement spatial à partir d'antennes élémentaires disposées en réseau. Il tire profit du déplacement connu du porteur, i.e. du dispositif lui-même (par exemple issu d'une orbitographie dans le cas d'un satellite, ou d'une référence inertielle ou odométrique, voire de référence cartographiques) et de la cohérence temporelle de la phase des signaux pour réaliser une antenne virtuelle.

Le traitement d'antenne synthétique permet l'obtention de gains de directivité importants dans n'importe quelle direction d'émission visée, supérieurs à ceux atteignables par des antennes réseaux du fait de l'encombrement et du nombre d'antennes élémentaires qui seraient alors nécessaires. Du fait de la simplicité du traitement d'antenne synthétique proposé, il est possible de réaliser la poursuite simultanément pour différentes directions d'émission des signaux transmis par chaque satellite.

Le traitement d'antenne synthétique proposé permet de réaliser la focalisation des signaux dans n'importe quelle direction d'émission. La correction dans le temps de la phase permet en effet de réaliser un traitement complet de compensation de la phase de l'onde émise dans n'importe quelle direction.

Ce traitement permet d'utiliser sans refonte importante l'architecture classique des émetteurs connus.

On reconstitue un effet d'antenne synthétique dans le cas d'un émetteur de système de navigation par satellites à partir de la connaissance du déplacement de l'antenne (considérée comme un capteur élémentaire) d'émission sans modification de l'architecture de traitement classique d'émission. L'effet d'antenne est obtenu par compensation de la phase du signal transmis.

Ainsi, le dispositif d'antenne à ouverture synthétique peut être orienté dans une ou plusieurs directions quelconques, et asservi par commande externe. Les coefficients de pondération en amplitude et en phase du dispositif d'antenne à ouverture synthétique sont appliqués sur les sorties complexes après corrélation par le code local, et avant intégration cohérente, et le diagramme de directivité du dispositif synthétique peut être optimisé pour chaque direction visée, de façon à minimiser le niveau des lobes secondaires de la fonction de directivité spatiale (pondération de Hamming, ...) et minimiser l'effet des interférences par création de zéros dans les directions des sources.

Les avantages d'un dispositif d'antenne à ouverture synthétique d'émission de signaux d'un système de navigation par satellites selon l'invention sont les suivants :

- amélioration de la sensibilité de réception sur l'ensemble des signaux satellites en vue,

- disponibilité du service de localisation dans une ou plusieurs zones géographiques de surface réduite, et

- occultation du service de localisation dans une ou plusieurs zones géographiques de surface réduite.

Le procédé consiste à compenser la phase du signal d'émission correspondant au déplacement réalisé par le porteur, et ceci dans la direction visée par l'antenne. Le signal émis peut résulter de la superposition de signaux compensés en phase pour plusieurs directions simultanément.

Afin de présenter le principe, on se restreint à une seule direction visée. Dans le cas d'une émission classique de signaux d'un système de navigation par satellites, la phase de la porteuse est déterminée par une horloge atomique ultra sensible embarquée qui fixe la référence de temps.

Le principe consiste à compenser la phase de porteuse du signal lors de la phase d'élaboration du signal numérique (avant conversion analogique), sans modifier le principe de génération du code.

Vu d'un récepteur se trouvant dans a zone visée, par l'antenne d'émission, la puissance du signal reçu sera plus importante (augmentée de la "directivité" de l'antenne synthétique d'émission, et la phase apparente est stable tant que dure la compensation de phase à l'émission (position apparente fixe).

Par contre, la phase du code d'étalement (retard de groupe) reste associée au déplacement du satellite.

Afin de conserver la cohérence de phase entre le code et la porteuse, il convient de recaler périodiquement la phase de la porteuse sur celle du code, par exemple en ne compensant la phase de porteuse que sur un nombre entier de longueurs de code périodique BPSK. Ceci impose de synchroniser les périodes d'intégration cohérente post corrélation de la boucle de phase du récepteur sur les périodes de remise en cohérence du signal d'émission.

Cette précaution étant respectée, l'architecture de traitement de l'émetteur reste identique à celle d'un émetteur standard de système de navigation par satellites.

La figure illustre schématiquement un mode de réalisation de l'invention en acquisition cohérente sur porteuse. Les éléments en pointillés représentent des éléments présents dans un dispositif classique d'émission de signaux et les éléments en traits continus représentent les éléments spécifiques à la réalisation d'une antenne synthétique en émission.

Un module de synchronisation 1 en temps permet de synchroniser la modélisation de trajectoire de référence de l'émetteur avec la génération du signal de correction, calculé au niveau du satellite, par l'utilisation d'une horloge commune ultra-stable.

La base de temps générée par le module de synchronisation 1 permet au module de détermination 2 de la trajectoire de calculer la vitesse $\vec{V}_p$ de déplacement de l'émetteur, i.e. du dispositif, à l'instant courant.

Un module de détermination 3 de la direction de visée permet, à partir de la base de temps générée parle module de synchronisation 1, de déterminer l'orientation du pointage du faisceau de l'antenne synthétique à partir de la position de l'émetteur et de la position de la zone géographique à couvrir par le pinceau d'émission.

A partir de la vitesse de déplacement de l'émetteur $\vec{V}_p$, un module de correction 4 calcule la correction de phase du signal émis correspondant à la projection de la vitesse de déplacement du dispositif dans la direction du signal émis, à partir de la direction de visée $\vec{d}$ délivrée par le module de détermination 3.

Cette correction de phase calculée par le module 4 est appliquée pour commander un oscillateur à commande numérique 5 pour corriger la phase de la porteuse d'émission.

Un module de réinitialisation 6 permet d'effectuer une réinitialisation à zéro de la correction phase de façon synchrone avec la génération périodique de code réalisée par un module de génération 7.

Un oscillateur à commande numérique de porteuse d'émission 8, entretenu par l'horloge de la base de temps du module 1, permet de générer un signal à la fréquence spécifiée de la porteuse du signal émis. Un multiplicateur 9 multiplie les signaux de sortie de l'oscillateur à commande numérique de porteuse d'émission 8 et de l'oscillateur à commande numérique 5 de correction de la phase de la porteuse d'émission.

Un oscillateur à commande numérique de code 10, entretenu par l'horloge de la base de temps du module 1, permet de commander le retard du code généré par le générateur 7 de code et de données. Un multiplicateur 11 effectue le produit du signal de sortie du générateur 7 et du signal de sortie du multiplicateur 9.

Un module de réinitialisation 12 permet de réinitialiser périodiquement le générateur de code 7, et fournit en parallèle un signal permettant de synchroniser la remise à zéro de la correction de phase effectuée par le module de réinitialisation 6.

Le signal numérique issu du multiplicateur 11 est ensuite classiquement converti en signal analogique par un convertisseur numérique/analogique 13, transposé à la fréquence RF d'émission par un module de transposition 14, et amplifié par un amplificateur 15 avant d'être envoyé sur l'antenne d'émission.

La présente invention permet de limiter la complexité d'une antenne d'émission de signaux d'un système de navigation par satellites, en réduisant la charge du traitement. En outre, le traitement d'antenne synthétique permet l'obtention de gains de directivité importants dans n'importe quelle direction de visée, sans commune mesure avec ceux atteignables par des antennes réseaux du fait de l'encombrement et du nombre d'antennes élémentaires qui seraient alors nécessaires, permettant ainsi d'améliorer le gain d'émission dans la direction de la zone choisie, tout en occultant l'émission dans les autres directions, et en rendant impossible la localisation en dehors de la zone définie.

Du fait de la simplicité du traitement d'antenne synthétique proposé, il est possible de réaliser l'émission simultanée pour différentes directions de visées associées à chaque satellite.

## Revendications

1. Dispositif d'antenne à ouverture synthétique d'émission de signaux d'un système de navigation par satellites comprenant une porteuse et des moyens de détermination de sa trajectoire (2), **caractérisé en ce qu'**il comprend, pour chaque signal respectivement associé à une direction spatiale, des moyens de traitement (3 à 11) adaptés pour générer un signal à phase stationnaire sur une fenêtre temporelle correspondant à la distance parcourue par le dispositif pendant la durée d'intégration cohérente, avant modulation dudit signal, lesdits moyens de traitement comprenant des moyens de correction (3, 4, 5, 6, 11) adaptés pour corriger la phase de porteuse dudit signal.

2. Dispositif selon la revendication 1, dans lequel lesdits moyens de correction comprennent, pour corriger la phase de porteuse dudit signal en phase d'acquisition ou en phase de poursuite :

   - des premiers moyens de détermination d'un vecteur vitesse de déplacement du dispositif (2) ;
   - des moyens de projection orthogonale (4) dudit vecteur vitesse de déplacement du dispositif dans la direction dudit signal ;
   - un premier oscillateur à commande numérique (5) recevant en entrée le ladite projection orthogonale ;
   - un premier multiplicateur (9) pour compenser la phase du signal de porteuse généré par un deuxième oscillateur à commande numérique (8) de porteuse par le signal délivré par ledit premier oscillateur à commande numérique (5) ;
   - un deuxième multiplicateur (11) pour multiplier le signal délivré par ledit premier multiplicateur (9) et les composantes de bases complexes du code d'étalement du signal généré par un générateur de code (7) ; et

- des moyens de transposition de fréquence (14) et d'amplification (15) pour transfert vers l'antenne d'émission du signal délivré par le deuxième multiplicateur (11) sur un intervalle de temps d'une durée T correspondant à une période du code d'étalement.

3. Procédé d'émission par antenne à ouverture synthétique de signaux d'un système de navigation par satellites comprenant une porteuse et des moyens de détermination de sa trajectoire, dans lequel, pour chaque signal respectivement associé à une direction spatiale, on effectue un traitement adapté pour générer un signal à phase stationnaire sur une fenêtre temporelle correspondant à la distance parcourue par le dispositif pendant la durée d'intégration cohérente, avant modulation dudit signal par ledit code, ledit traitement comprenant une correction de la phase de porteuse dudit signal.

4. Procédé selon la revendication 3, dans lequel ladite correction de la phase de porteuse dudit signal comprend, en phase d'acquisition ou en phase de poursuite :

  - une détermination d'un vecteur vitesse de déplacement de ladite antenne ;
  - une projection orthogonale dudit vecteur vitesse de déplacement dans la direction d'émission dudit signal ;
  - une génération d'un signal de correction de la phase de la porteuse, synchronisé sur la période du code d'étalement, réalisée par un oscillateur numérique commandé en phase à partir de la vitesse de déplacement de l'antenne dans la direction d'émission du signal ;
  - une mise à zéro dudit signal de correction à chaque début de période dudit code d'étalement ;
  - une multiplication en composantes de bases complexes dudit signal de correction et du signal à émettre, synchronisée sur chaque intervalle de temps d'une durée T correspondant à une période du code d'étalement ; et
  - une émission cohérente du signal résultant de ladite multiplication.

**Europäisches Patentamt**
**European Patent Office**
**Office européen des brevets**

# RAPPORT DE RECHERCHE EUROPEENNE

Numéro de la demande

EP 11 17 1964

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 1 772 742 A1 (BOEING CO [US]) 11 avril 2007 (2007-04-11) * alinéa [0003] - alinéa [0005]; figures 1a,1b * * alinéa [0015] - alinéa [0017] * ----- | 1,3 | INV. G01S19/02 |
| A | US 5 469 167 A (POLGE ROBERT J [US] ET AL) 21 novembre 1995 (1995-11-21) * colonne 5 - colonne 8; figures 1,12 * ----- | 1,3 | |
| A | WO 93/09614 A1 (CALLING COMMUNICATIONS CORP [US]) 13 mai 1993 (1993-05-13) * abrégé; figures 1-3 * * pages 7,8 * ----- | 1,3 | |
| A | US 3 795 865 A (ARMSTRONG T) 5 mars 1974 (1974-03-05) * colonnes 11,12; figures 2,10 * ----- | 1,3 | |
| A | WO 98/14796 A2 (QUALCOMM INC [US]) 9 avril 1998 (1998-04-09) * abrégé * * page 23, ligne 17 - ligne 24 * ----- | 1,3 | DOMAINES TECHNIQUES RECHERCHES (IPC) H04B H01Q G01S |

Le présent rapport a été établi pour toutes les revendications

| Lieu de la recherche | Date d'achèvement de la recherche | Examinateur |
|---|---|---|
| La Haye | 1 août 2011 | Esbri, Oriol |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 17 1964

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-08-2011

| Document brevet cité au rapport de recherche | | Date de publication | Membre(s) de la famille de brevet(s) | | Date de publication |
|---|---|---|---|---|---|
| EP 1772742 | A1 | 11-04-2007 | US | 2007080859 A1 | 12-04-2007 |
| US 5469167 | A | 21-11-1995 | AUCUN | | |
| WO 9309614 | A1 | 13-05-1993 | AT | 146637 T | 15-01-1997 |
| | | | AU | 3176893 A | 07-06-1993 |
| | | | CA | 2121349 A1 | 13-05-1993 |
| | | | DE | 69216112 D1 | 30-01-1997 |
| | | | DE | 69216112 T2 | 12-06-1997 |
| | | | EP | 0611501 A1 | 24-08-1994 |
| | | | JP | 8500216 T | 09-01-1996 |
| | | | US | 5408237 A | 18-04-1995 |
| US 3795865 | A | 05-03-1974 | AUCUN | | |
| WO 9814796 | A2 | 09-04-1998 | AT | 230492 T | 15-01-2003 |
| | | | CA | 2267335 A1 | 09-04-1998 |
| | | | CN | 1239549 A | 22-12-1999 |
| | | | CN | 1550789 A | 01-12-2004 |
| | | | DE | 69718187 D1 | 06-02-2003 |
| | | | DE | 69718187 T2 | 17-09-2009 |
| | | | EP | 0929823 A2 | 21-07-1999 |
| | | | HK | 1021567 A1 | 29-08-2003 |
| | | | JP | 4060368 B2 | 12-03-2008 |
| | | | JP | 2001504579 A | 03-04-2001 |
| | | | JP | 4308286 B2 | 05-08-2009 |
| | | | JP | 2008032709 A | 14-02-2008 |
| | | | KR | 20000049036 A | 25-07-2000 |
| | | | TW | 455691 B | 21-09-2001 |
| | | | US | 6078284 A | 20-06-2000 |
| | | | ZA | 9708514 A | 10-06-1998 |

EPO FORM P0460

Pour tout renseignement concernant cette annexe : voir Journal Officiel de l'Office européen des brevets, No.12/82